# EUROPEAN PATENT SPECIFICATION

(11) **EP 4 234 406 B1**
(45) Date of publication and mention of the grant of the patent: **18.11.2026**
(21) Application number: 23174897.1
(22) Date of filing: 30.04.2021
(51) Int. Cl.: B64D 11/06

(54) **ADJUSTABLE ARMREST ASSEMBLY**
VERSTELLBARE ARMLEHNENANORDNUNG
ENSEMBLE ACCOUDOIR RÉGLABLE

(30) Priority: 01.05.2020 IN 202041018717; 05.08.2020 US 202016985639
(43) Date of publication of application: 30.08.2023
(62) Document number(s) of the earlier application(s) in accordance with Art. 76 EPC: 21171671.7 / 3 964 103
(73) Proprietor: B/E Aerospace, Inc., Winston-Salem, NC 27105 (US)
(72) Inventor: RAO, Sreekanth Koti Ananda, Bangalore 560061 (IN); KRISHNA KUMAR, Pavan Kumar, Bangalore 560010 (IN); ACHARYA, Pradeep, Bangalore 560072 (IN)
(74) Representative: Dehns

(56) References cited:
- EP-A2- 2 003 016
- US-A- 5 242 138
- US-A- 5 823 976

## Description

### CROSS-REFERENCE TO RELATED APPLICATIONS

This application claims priority to and the benefit of Indian Patent Application No. 202041018717 filed May 1, 2020 entitled "ADJUSTABLE ARMREST ASSEMBLY".

### FIELD

The present disclosure relates to armrests, and in particular to adjustable armrest assemblies.

### BACKGROUND

Conventional armrests for pilot seats in an aircraft are generally complex, costly, and heavy. For example, conventional armrests are generally configured to provide height and tilt adjustability through a complex series of interconnected parts and moving components. The complexity of conventional armrests increases costs, and the excessive weight adversely affects operational efficiency of the aircraft. Armrest assemblies are disclosed in US 5 242 138 A, US 5 823 976 A and EP 2 003 016 A2.

### SUMMARY

The invention provides an armrest assembly for a seat, as defined by claim 1. Preferred features of the invention are set out in the dependent claims.

In various embodiments, the first shaft and the second shaft are threaded.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 is a cross-sectional view of an armrest assembly, in accordance with various examples that are not covered by the claimed invention;
FIG. 2A is a cross-sectional view of an armrest assembly in a lowered position, in accordance with various examples that are not covered by the claimed invention;
FIG. 2B is a cross-sectional view of an armrest assembly in an intermediate position, in accordance with various examples that are not covered by the claimed invention;
FIG. 2C is a cross-sectional view of an armrest assembly in a raised position, in accordance with various examples that are not covered by the claimed invention;
FIG. 3A is a cross-sectional view of an armrest assembly in a tilted rearward position, in accordance with various examples that are not covered by the claimed invention;
FIG. 3B is a cross-sectional view of an armrest assembly in flat position, in accordance with various examples that are not covered by the claimed invention;
FIG. 3C is a cross-sectional view of an armrest assembly in a tilted forward position, in accordance with various examples that are not covered by the claimed invention;
FIG. 4A is a cross-sectional view of a locking mechanism in a locked configuration, in accordance with various examples that are not covered by the claimed invention;
FIG. 4B is a cross-sectional view of a locking mechanism in a released configuration, in accordance with various examples that are not covered by the claimed invention;
FIG. 5 is a cross-sectional view of an armrest assembly having one fixed shaft, in accordance with the invention; and
FIG. 6 is a cross-sectional view of an armrest assembly having two shafts with independent and separate locking mechanisms, in accordance with various examples that are not covered by the claimed invention.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the invention as defined by the claims. Thus, the detailed description herein is presented for purposes of illustration only and not of limitation.

Disclosed herein, according to various embodiments, is an armrest assembly that is adjustable. Generally, the armrest assembly disclosed herein includes a base, an armrest, and one or more shafts extending from the base and being pivotably coupled to the armrest to facilitate quick and easy height and tilt adjustments to the armrest by a pilot or other occupant of the seat with which the armrest assembly is implemented. Although details and examples are included herein pertaining to implementing the armrest assembly for a seat of an aircraft, the present disclosure is not necessarily so limited, and thus aspects of the disclosed embodiments may be adapted for performance in a variety of other industries. As such, numerous applications of the present disclosure may be realized.

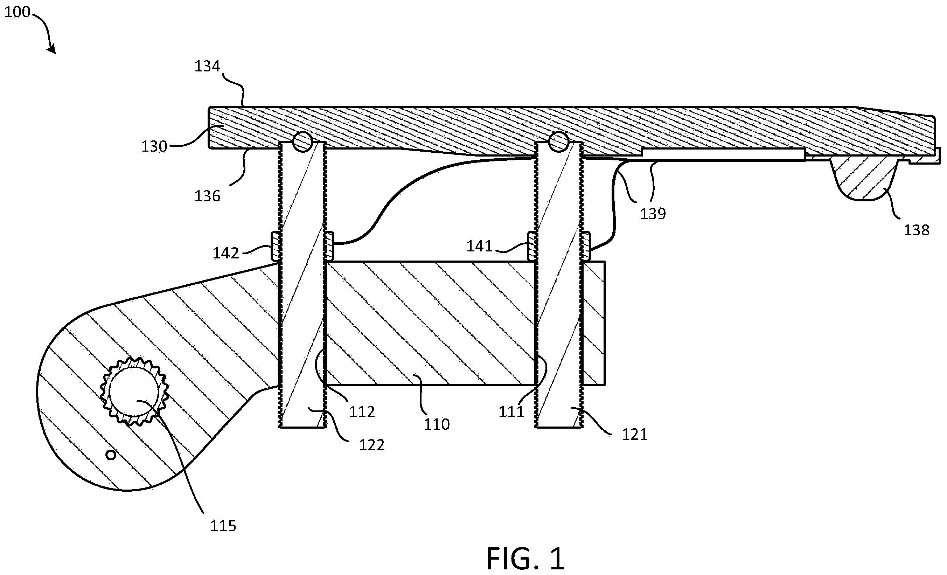

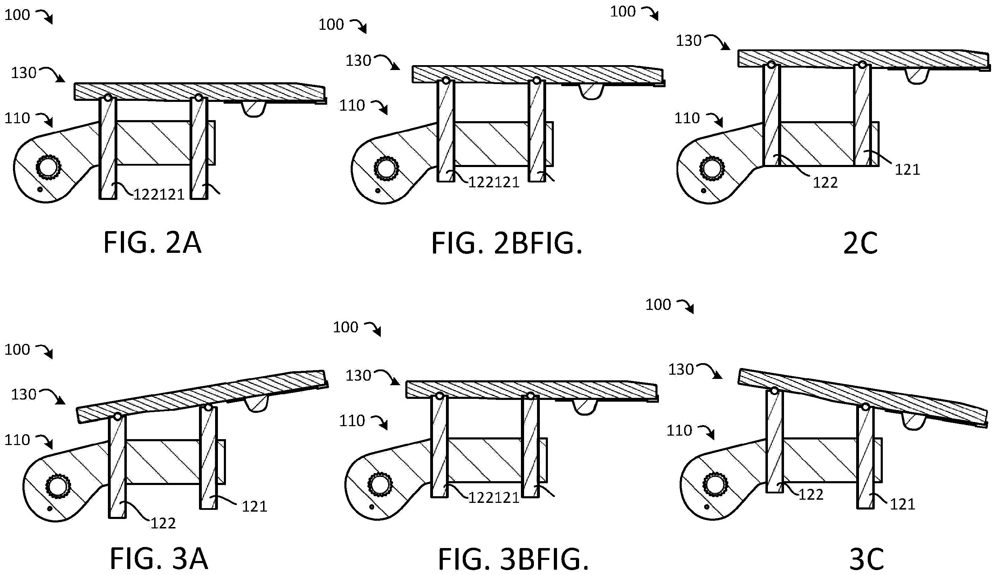

In this example, not covered by the claimed invention, with reference to FIG. 1, the armrest assembly 100 includes a base 110, a shaft 121, and an armrest 130. The armrest 130 may include an underside 136 and an upper surface 134 configured to support a user's arm. The shaft 121 may be slidably coupled to the base 110 to allow for the height of the armrest 130 relative to the base 110 to be adjusted. Further, the shaft 121 may be pivotably coupled to the underside 136 of the armrest 130 to allow for the tilt/orientation of the armrest 130 to be adjusted relative to the base 110. Additional details pertaining to height and tilt adjustments are included below with reference to FIGS. 2A, 2B, 2C, 3A, 3B, and 3C.

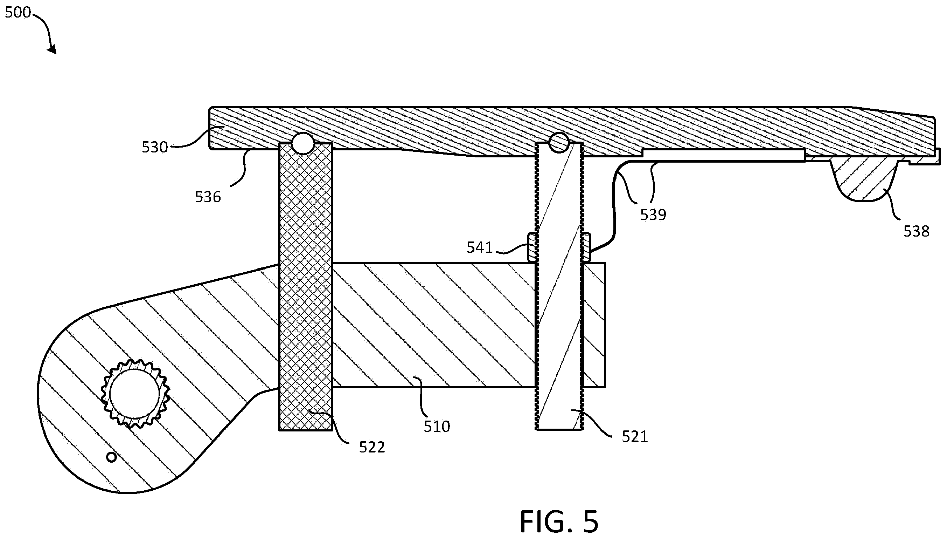

In this example, not covered by the claimed invention, , the shaft 121 is a first shaft 121, and the armrest assembly 100 includes a second shaft 122 pivotably coupled to the underside of the armrest 130. For example, the first shaft 121 may be coupled to a forward portion of the armrest 130 and the second shaft 122 may be coupled to a rear portion of the armrest 130. In the claimed invention, and with reference to FIG. 5 and as described in greater detail below, the second shaft 522 is fixed relative to the base 510 such that only one of the two shafts (e.g., first shaft 521) is slidable relative to the base 510, thus providing tilt adjustability but not overall height adjustability.

In this example, not covered by the claimed invention, the pivoting connection between the one or more shafts and the armrest may allow for roll/tilt about a longitudinal axis of the armrest, thus allowing the armrest to not only be tilted in a forward and/or rear direction but also tilted laterally inward or laterally outward (relative to a user/occupant of the seat). The base 110 is connected to seat support structure at a pivoting connection 115. Thus, the base 110 may pivot relative to the seat to provide a first extent/degree of incline for the armrest assembly, with the adjustability of the shafts providing further height/incline adjustability.

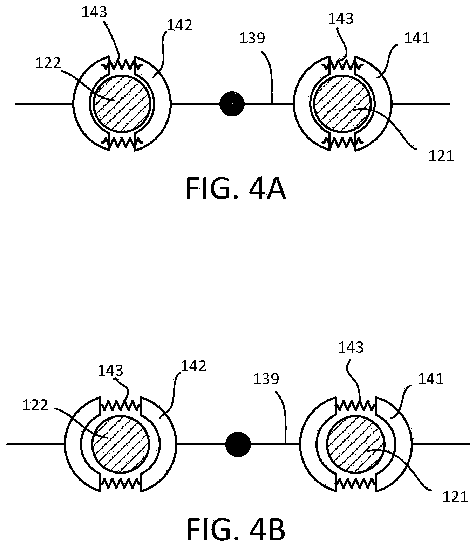

In this example, not covered by the claimed invention, the armrest assembly 100 further includes a locking mechanism configured to reversibly lock the first shaft 121 and the second shaft 122 relative to the base 110 to prevent sliding of the first shaft 121 and the second shaft 122 relative to the base 110 (a "locked configuration"). Correspondingly, the locking mechanism may also be configured to reversibly release the first shaft 121 relative to the base 110 to allow sliding of the first shaft 121 relative to the base 110 (a "released configuration"). As described in greater detail below with reference to FIGS. 4A and 4B, by way of explanation, the locking mechanism may include respective clamp rings 141, 142 for the shafts 121, 122. That is, a first clamp ring 141 may be disposed around the first shaft 121 and a second clamp ring 142 may be disposed around the second shaft 122.

In this example, not covered by the claimed invention, and with continued reference to FIG. 1, the armrest 130 of the armrest assembly 100 includes a graspable handle 138. The graspable handle 138 may be configured to actuate the locking mechanism, thereby allowing a user/occupant to easily and quickly switch between the locked configuration and the released configuration. The graspable handle 138 may be disposed on the underside 136 of the armrest 130, and may be configured to translate back and forth along a section of the armrest 130. In response to the translating motion of the graspable handle 138, a control cable 139 may transmit said movement to the locking mechanism (e.g., the clamp rings 141, 142) to toggle the locking mechanism between the locked and released configuration. The , actuation of the graspable handle 138 controls the locking and release of both shafts 121, 122, thus allowing the height and the tilt of the armrest 130 to be fully customized (e.g., as shown in FIGS. 2A-3C).

In this example, not covered by the claimed invention, , the first and second shafts 121, 122 are threaded, or have some other outward surface features that allow for secure engagement with the corresponding clamp rings 141, 142. The first and second clamp rings 141, 142 have complementary threads or other inward surface features. The base 110 defines a first slot 111 for slidably receiving the first shaft 121 and a second slot 112 for slidably receiving the second shaft 122. The first and second slots 111, 112 are non-threaded. For example, the shafts 121, 122 may not directly and positively engage with the inward surfaces of the slots 111, 112, but instead the slots 111, 112 are mere guide channels for ensuring the shafts 121, 122 that facilitate sliding of the shafts 121, 122 therein. The respective sliding/engagement surface(s) of the slots 111, 112 and the shafts 121, 122 may include a self-lubricating material, or may otherwise be configured to enable motion relative to each other. The the clamp rings 141, 142 are affixed/mounted to the base 110.

In this example, not covered by the claimed invention, and with reference to FIGS. 2A, 2B, 2C, 3A, 3B, and 3C, examples of the height and tilt adjustability of the armrest assembly 100 are provided. To avoid obscuring the clarity of these depictions, the locking mechanism is not shown in these views. With reference to FIGS. 2A, 2B, and 2C, both shafts 121, 122 may be translated relative to the base 110 to the same extent, thus maintaining a constant tilt/orientation of the armrest 130 but adjusting the overall height of the armrest 130. with reference to FIGS. 3A, 3B, and 3C, one of the shafts may be translated while the other shaft is not translated (or is at least translated to a lesser extent), thus allowing for the forward/rearward tilt of the armrest 130 to be adjusted.

In this example, not covered by the claimed invention, with reference to FIGS. 4A and 4B, an example of the locking mechanism is provided in the locked configuration (FIG. 4A) and the released configuration (FIG. 4B). In various embodiments, each of the clamp rings 141, 142 includes two portions (e.g., two halves) coupled together via a spring element 143. The spring element 143 may bias the two portions together, thus causing the clamp rings 141, 142 to securely engage the retained shafts 121, 122 in the locked configuration. In response to actuation of the graspable handle 138, the control cable 139 transmits a pulling force to the clamp rings 141, 142 to overcome the bias of the spring element 143, thus causing the portions of each clamp ring 141, 142 to separate from each other and thus sufficiently disengage from the shafts 121, 122 to allow movement of the shafts 121, 122.

According to the invention, with reference to FIG. 5, the armrest assembly 500 includes a first shaft 521 that is slidably retained within a slot of the base 510 and a second shaft 522 that is fixed relative to the base 510 (e.g., that is non-movable relative to the base 510). The second shaft 522 is still pivotably coupled to the underside 536 of the armrest 530, thus allowing the armrest 530 to tilt in response to sliding movement of the first shaft 521 relative to the base 510. According to the invention, the locking mechanism includes a single clamp ring 541 that is actuated via a control cable 539 extending from the graspable handle 538.

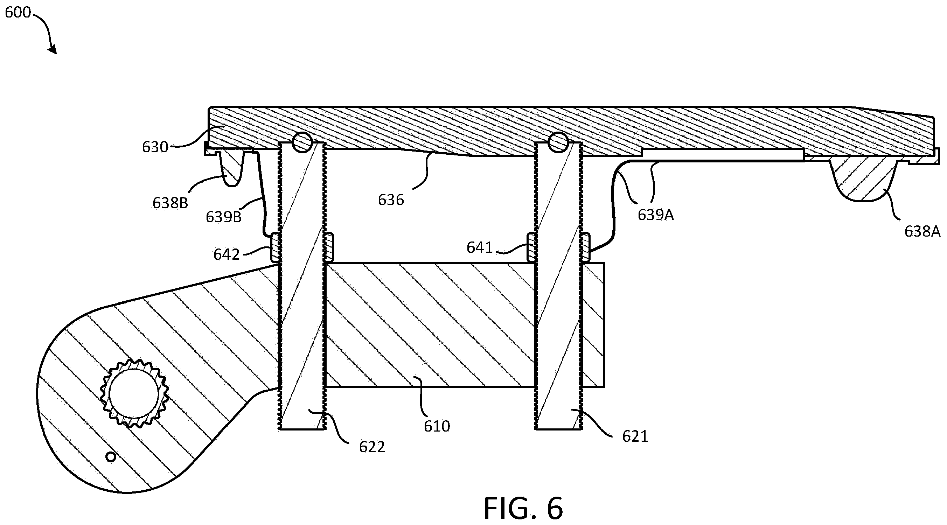

In this example, not covered by the claimed invention, with FIG. 6 shows, by way of background an armrest assembly 600 that includes a first shaft 621 that is slidably retained within a slot of the base 610 and a second shaft 622 that is also slidably retained within another slot of the base 610. The armrest assembly 600 may include two separate locking mechanism, one for each of the shafts 621, 622. A , first locking mechanism, which may include a first clamp ring 641 actuatable by a first graspable handle 638A and a first control cable 639A, may be configured to reversibly lock/release the first shaft 621 relative to the base 610. A second locking mechanism separate and independent from the first locking mechanism, which may include a second clamp ring 642 actuatable by a second graspable handle 638B and a second control cable 639B, may be configured to reversibly lock/release the second shaft 622 relative to the base 610. Said differently, the two shafts 621, 622 of the armrest assembly 600 may be configured to be independently and separately actuatable. Electric actuators may be utilized to electrically actuate adjustment of the armrest assembly. That is, the system may include a controller and one or more electric actuators electrically coupled to the controller. The controller may be configured to send control signals to the electric actuators for powered control of the armrest.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

## Claims

1. An armrest assembly (500) for a seat, the armrest assembly (500) comprising:
a base (510) defining a first slot and a second slot;
an armrest (530) comprising an underside (536) and an upper surface configured to support a user's arm;
a first shaft (521) slidably received within the first slot and pivotably coupled to the underside (536) of the armrest (530);
a second shaft (522) non-slidably fixed extending from the base and pivotably coupled to the underside (536) of the armrest (530); and
a locking mechanism configured to:
reversibly lock the first shaft (521) relative to the base (510) in a locked configuration to prevent sliding of the first shaft (521) relative to the base (510); and
reversibly release the first shaft (521) relative to the base (510) in a released configuration to allow sliding of the first shaft (521) relative to the base (510);
wherein the armrest (530) comprises a graspable handle (538) disposed on the underside (536) of the armrest (530) and configured to translate back and forth along a section of the armrest (530), and a control cable (539) extending from the graspable handle (538);
wherein the locking mechanism comprises a first single clamp ring (541) disposed around the first shaft (521); and wherein the control cable (539) is configured to transmit the translation of the graspable handle (538) to the first single clamp ring (541) to actuate the first single clamp ring (541) between the locked configuration and the released configuration.

2. The armrest assembly of claim 1, wherein the first shaft is pivotably coupled to a forward portion of the armrest and the second shaft is pivotably coupled to a rear portion of the armrest.

3. The armrest assembly of claim 1, wherein the first shaft is threaded.

4. The armrest assembly of claim 3, wherein the first single clamp ring is threaded.

## Patentansprüche

1. Eine Armlehnenanordnung (500) für einen Sitz, wobei die Armlehnenanordnung (500) umfasst:
eine Basis (510), die einen ersten Schlitz und einen zweiten Schlitz definiert;
eine Armlehne (530), die eine Unterseite (536) und eine Oberfläche umfasst, die zum Stützen
des Arms eines Benutzers ausgebildet ist;
eine erste Welle (521), die verschiebbar in dem ersten Schlitz aufgenommen und schwenkbar
mit der Unterseite (536) der Armlehne (530) gekoppelt ist;
eine zweite Welle (522), die nicht verschiebbar fixiert ist,
sich von der Basis erstreckt und schwenkbar
mit der Unterseite (536) der Armlehne (530) gekoppelt ist; und
einen Verriegelungsmechanismus, der ausgebildet ist, um:
die erste Welle (521) in Bezug auf die Basis (510) in einer verriegelten Konfiguration reversibel zu verriegeln, um ein Verschieben der ersten Welle (521) relativ zur Basis (510) zu verhindern; und
die erste Welle (521) in Bezug auf die Basis (510) in einer freigegebenen Konfiguration reversibel freizugeben,
um ein Verschieben der ersten Welle (521) relativ zur Basis (510) zu ermöglichen;
wobei die Armlehne (530)
einen greifbaren Griff (538) umfasst, der an der Unterseite (536)
der Armlehne (530) angeordnet ist und ausgebildet ist, um sich entlang eines Abschnitts der
Armlehne (530) hin und her zu bewegen, und ein
Steuerkabel (539), das sich von dem greifbaren Griff (538) erstreckt;
wobei der Verriegelungsmechanismus einen ersten einzelnen Klemmring (541) umfasst, der um die
erste Welle (521) angeordnet ist; und wobei das Steuerkabel (539) ausgebildet ist, um die Bewegung
des greifbaren Griffs (538) auf den ersten einzelnen Klemmring (541) zu übertragen, um den ersten einzelnen
Klemmring (541) zwischen
der verriegelten Konfiguration und der freigegebenen Konfiguration zu betätigen.

2. Die Armlehnenanordnung nach Anspruch 1, wobei die erste Welle schwenkbar mit einem vorderen
Abschnitt der Armlehne gekoppelt ist und die zweite Welle schwenkbar mit einem hinteren Abschnitt der Armlehne gekoppelt ist.

3. Die Armlehnenanordnung nach Anspruch 1, wobei die erste Welle mit Gewinde versehen ist.

4. Die Armlehnenanordnung nach Anspruch 3, wobei der erste einzelne Klemmring mit Gewinde versehen ist.

## Revendications

1. Un ensemble accoudoir (500) pour un siège, l'ensemble accoudoir (500) comprenant :
une base (510) définissant une première fente et une seconde fente ;
un accoudoir (530) comprenant une face inférieure (536) et une surface supérieure configurée pour
supporter le bras d'un utilisateur ;
un premier arbre (521) reçu de manière coulissante dans la première fente et couplé de manière
pivotante à la face inférieure (536) de l'accoudoir (530) ;
un second arbre (522) fixé de manière non coulissante s'étendant depuis la base et couplé de
manière pivotante à la face inférieure (536) de l'accoudoir (530) ; et
un mécanisme de verrouillage configuré pour :
verrouiller de manière réversible le premier arbre (521) par rapport à la base (510) dans une
configuration verrouillée pour empêcher le coulissement du premier arbre (521) par rapport à la
base (510) ; et
libérer de manière réversible le premier arbre (521) par rapport à la base (510) dans une
configuration libérée pour permettre le coulissement du premier arbre (521) par rapport à la
base (510) ;
dans lequel l'accoudoir (530) comprend une poignée saisissable (538) disposée sur la face
inférieure (536) de l'accoudoir (530) et configurée pour se translater d'avant en arrière le long
d'une section de l'accoudoir (530), et un
câble de commande (539) s'étendant depuis la poignée saisissable (538) ;
dans lequel le mécanisme de verrouillage comprend une première bague de serrage
unique (541) disposée autour du
premier arbre (521) ; et dans lequel le câble de commande (539) est configuré pour transmettre
la translation de la poignée saisissable (538) à la première bague de serrage unique (541) pour
actionner la première bague de serrage unique (541) entre
la configuration verrouillée et la configuration libérée.

2. L'ensemble accoudoir de la revendication 1, dans lequel le premier arbre est couplé de manière
pivotante à une partie avant de l'accoudoir et le second arbre est couplé de manière pivotante à une partie arrière de l'accoudoir.

3. L'ensemble accoudoir de la revendication 1, dans lequel le premier arbre est fileté.

4. L'ensemble accoudoir de la revendication 3, dans lequel la première bague de serrage unique est filetée.
